# EUROPEAN PATENT APPLICATION

(11) **EP 4 603 542 A1**
(43) Date of publication of application: **20.08.2025**
(21) Application number: 23891997.1
(22) Date of filing: 15.11.2023
(51) Int. Cl.: C08L 77/02, C08L 77/06, C08L 23/16, C08L 23/08, C08K 5/00, C08K 5/13, C08K 5/17, C08K 5/19, C08K 5/524, F16C 1/16

(54) **POLYAMIDE RESIN COMPOSITION AND MOLDED ARTICLE MANUFACTURED BY USING SAME**

(30) Priority: 15.11.2022 KR 20220152962
(71) Applicant: Kolon ENP, Inc., Gimcheon-si Gyeongsangbuk-do 39537 (KR)
(72) Inventor: KIM, Jae-Min, Gimcheon-si Gyeongsangbuk-do 39537 (KR); CHUNG, Gi Bong, Gimcheon-si Gyeongsangbuk-do 39537 (KR)
(74) Representative: Ter Meer Steinmeister & Partner
(86) International application number: PCT/KR2023/018331
(87) International publication number: WO 2024/106931

(57) **Abstract**

Provided is a polyamide resin composition including: 38 wt% to 82 wt% of polyamide 6; 1 wt% to 30 wt% of a long chain polyamide; 15 wt% to 35 wt% of an impact modifier including a polyolefin-based rubber; 0.1 wt% to 1.0 wt% of an antioxidant including a phenol-based antioxidant, an amine-based antioxidant, a phosphite-based antioxidant, or a mixture thereof; and 0.1 wt% to 1.0 wt% of a release agent including ethylene bis stearamide.

## Description

### [Technical Field]

The present disclosure relates to a polyamide resin composition and molded article for a pressure vessel liner manufactured using the same.

### [Background Art]

Recently, hydrogen cars using hydrogen as an energy source have been drawing attention as environmentally-friendly transportation vehicles. As the hydrogen has a risk of explosion, various parts for storing and transporting the hydrogen should have safety at a high level and functionality.

A hydrogen tank storing the hydrogen may internally have a plastic liner, wherein such a hydrogen tank liner requires high rigidity to withstand high-pressure hydrogen and durability to maintain performance during repeatedly charging the hydrogen. Specifically, the hydrogen tank liner should have excellent tensile elongation to withstand the high-pressure hydrogen and high gas barrier properties to prevent transmission of the hydrogen and in addition, because the hydrogen is charged by creating a low-temperature environment, realize excellent tensile elongation and durability even at the low temperature. There is a need to develop plastic materials simultaneously satisfying these properties.

### [Disclosure]

### [Technical Problem]

One aspect of the invention provides a polyamide resin composition having excellent mechanical properties at room temperature and low temperature, high gas barrier properties, and excellent durability, while including a small amount of long chain polyamide.

Another aspect of the invention provides a molded article for a pressure vessel liner manufactured using a polyamide resin composition.

### [Technical Solution]

According to an embodiment, provided is a polyamide resin composition including 38 wt% to 82 wt% of polyamide 6, 1 wt% to 30 wt% of a long chain polyamide, 15 wt% to 35 wt% of an impact modifier including a polyolefin-based rubber, 0.1 to 1.0 wt% of an antioxidant including a phenol-based antioxidant, an amine-based antioxidant, a phosphite-based antioxidant, or a mixture thereof, and 0.1 to 1.0 wt% of a release agent including ethylene bis stearamide.

A relative viscosity of polyamide 6 may be 1.8 to 3.4.

The long chain polyamide may be a polyamide having from 8 to 20 carbon atoms per nitrogen atom in one repeating unit.

The long chain polyamide may include PA8, PA9, PA10, PA11, PA12, PA13, PA48, PA410, PA412, PA414, PA418, PA58, PA510, PA512, PA514, PA518, PA68, PA610, PA612, PA614, PA618, PA88, PA810, PA812, PA1010, PA1012, PA1014, PA1018, PA1210, PA1212, PA1214, PA1218, PA1410, PA1412, PA1414, PA1418, PA8T, PA9T, PA10T, PA12T, PA8I, PA9I, PA10I, PA121, a copolymer thereof, or a mixture thereof.

The long chain polyamide may include PA11, PA12, PA610, PA612, PA618, PA1010, PA1012, PA1212, a copolymer thereof, or a mixture thereof.

The polyamide resin composition may include 15 wt% to 25 wt% of the long chain polyamide based on a total weight of the polyamide resin composition.

The impact modifier may further include an ethylene-propylene rubber, an ethylene-propylene-diene rubber, an ethylene-vinyl acetate rubber, or a mixture thereof.

The release agent may further include a polyethylene-based release agent, an ester-based release agent, or a mixture thereof.

The polyamide resin composition may have a tensile elongation (ISO 527, measurement speed: 50 mm/min) at low temperature (-40 °C) of greater than or equal to 30% and an impact strength (ISO 180, IZOD) at low temperature (-40 °C) of greater than or equal to 20 kJ/m².

According to another embodiment, a molded article for a pressure vessel liner manufactured using the aforementioned polyamide resin composition is provided.

### [Advantageous Effects]

The polyamide resin composition according to the embodiment exhibits excellent mechanical properties such as high tensile elongation (ISO 527, measurement speed: 50 mm/min) not only at room temperature but also in a low temperature (-40 °C) environment while including a small amount of long chain polyamide, and at the same time excellent impact strength (ISO 180, IZOD) at a low temperature (-40 °C), and may be used as a molded article material for a pressure vessel liner due to excellent gas barrier properties, chemical resistance, and durability,.

### [Best Mode]

The advantages and features of the present disclosure and the methods for accomplishing the same will be apparent from the embodiments described hereinafter. However, the embodiments should not be construed as being limited to the embodiments set forth herein. Unless otherwise defined, all terms (including technical and scientific terms) used herein have the same meaning as commonly understood by one of ordinary skill in the art. The terms defined in a generally-used dictionary may not be interpreted ideally or exaggeratedly unless clearly defined.

In addition, unless explicitly described to the contrary, the word "comprise," and variations such as "comprises" or "comprising," will be understood to imply the inclusion of stated elements but not the exclusion of any other elements. Further, the singular includes the plural unless mentioned otherwise.

The polyamide resin composition according to an embodiment includes polyamide 6, a long chain polyamide, an impact modifier, an antioxidant, and a release agent.

The long chain polyamide has an advantage of maintaining tensile elongation and impact strength at low temperatures (-40 °C). However, in order to achieve this effect, it is necessary to use long chain polyamide in an amount of greater than or equal to 10 wt% based on a total weight of the polyamide resin composition.

According to an embodiment, a polyamide resin composition includes 38 to 82 wt% of polyamide 6, 1 to 30 wt% of long chain polyamide, 15 to 30 wt% of an impact modifier including a polyolefin-based rubber, 0.1 to 1.0 wt% of an antioxidant including a phenol-based antioxidant, an amine-based antioxidant, a phosphite-based antioxidant, or a mixture thereof, and 0.1 to 1.0 wt% of a release agent including ethylene bis stearamide, thereby having excellent mechanical properties at room temperature and low temperatures, high gas barrier properties, and excellent durability while containing a small amount of long chain polyamide.

The polyamide 6 (PA 6) refers to a polyamide manufactured from ε-caprolactam or 6-aminocaproic acid, and in some cases, may be a copolymer with other monomers. The polyamide 6 has excellent mechanical strength, such as tensile elongation, and excellent chemical resistance and moldability.

The relative viscosity of polyamide 6 may be 1.8 to 3.4, for example 2.0 to 3.0, or 2.3 to 2.8. Here, the relative viscosity may be measured using a viscometer by adding 1 g of polyamide 6 to 100 ml of 96% sulfuric acid at 20 °C. When the relative viscosity of polyamide 6 satisfies the range, it can exhibit excellent mechanical strength and maintain appropriate fluidity during injection molding.

There is no particular limitation on the amount of amino terminal groups of polyamide 6, but it may be 1.0X10⁻⁵ mol/g to 10.0X10⁻⁵, in which case a sufficient degree of polymerization may be obtained, thereby improving mechanical strength, etc.

The polyamide 6 may be prepared by a well-known method or may be used by selecting a commercially available one.

The polyamide 6 may be included in an amount of 38 wt% to 82 wt% for example, 39.5 wt% to 79.5 wt% based on the total weight of the polyamide resin composition. When polyamide 6 is included in this range, the polyamide resin composition can realize excellent mechanical properties, durability, and moldability.

The long chain polyamide is a polyamide having a long carbon chain in a repeating unit, and specifically, may be a polyamide having from 8 to 20 carbon atoms per nitrogen atom in one repeating unit. Here, the number of carbon atoms per nitrogen atom may be, for example, 8 to 18, 8 to 16, 8 to 14, or 8 to 12. The polyamide resin composition includes the long chain polyamide and thus may improve mechanical properties such as tensile elongation and the like at a low temperature.

The long chain polyamide may include for example PA8, PA9, PA10, PA11, PA12, PA13, PA48, PA410, PA412, PA414, PA418, PA58, PA510, PA512, PA514, PA518, PA68, PA610, PA612, PA614, PA618, PA88, PA810, PA812, PA1010, PA1012, PA1014, PA1018, PA1210, PA1212, PA1214, PA1218, PA1410, PA1412, PA1414, PA1418, PA8T, PA9T, PA10T, PA12T, PA8I, PA9I, PA101, PA121, a copolymer thereof, or a mixture thereof. The long chain polyamide may be a homopolymer or a copolymer.

For example, the long chain polyamide may include PA11, PA12, PA610, PA612, PA618, PA1010, PA1012, PA1212, a copolymer thereof, or a mixture thereof. In this case, the tensile elongation at low temperatures of the polyamide resin composition may be significantly improved.

The long chain polyamide may have a conventional molecular weight and relative viscosity of 1.8 to 4.0 when measured in 98 wt% of a sulfuric acid solution at 25 °C.

An amount of the long chain polyamide may be 1 wt% to 30 wt%, for example, 1 wt% to 25 wt%, 5 wt% to 25 wt%, 10 wt% to 25 wt%, or 15 wt% to 25 wt% based on 100 wt% of the polyamide resin composition. When the amount ranges are satisfied, the polyamide resin composition may realize excellent mechanical strength and durability at a low temperature.

For example, the polyamide resin composition may have a tensile elongation (ISO 527, measurement speed: 50 mm/min) at low temperature (-40 °C) of greater than or equal to 30% and an impact strength (ISO 180, IZOD) at low temperature (-40 °C) of greater than or equal to 20 kJ/m².

The polyamide resin composition includes an impact modifier and thereby, may realize a resin with high strength. The impact modifier may be, for example, a polyolefin-based rubber, and may include, for example an ethylene-propylene rubber, an ethylene-propylene-diene rubber, an ethylene-octene rubber, an ethylene-vinyl acetate rubber, or a combination thereof. They can significantly improve the impact strength of the polyamide resin composition without deteriorating other physical properties.

The impact modifier may be one modified with maleic anhydride, and may be, for example, a polyolefin-based rubber grafted with maleic anhydride, specifically, an ethylene-octene rubber grafted with maleic anhydride. For example, the impact modifier may include an ethylene octene copolymer and a compound in which at least one of an α,β-unsaturated carboxylic acid, an α,β-unsaturated anhydride and a derivative thereof is grafted in an amount of 0.5 to 5 parts by weight based on 100 parts by weight of the ethylene octene copolymer.

When used, the kneading characteristics of resin components such as polyamide 6 and impact modifier may be improved.

An amount of the impact modifier may be 15 wt% to 35 wt%, for example 15 wt% to 30 wt%, based on a total weight of the polyamide resin composition. When the amount of the impact modifier satisfies the ranges, the polyamide resin composition may improve tensile elongation, durability, and chemical resistance at a low temperature as well as exhibit excellent impact strength.

The antioxidant prevents the deterioration of physical properties due to heat that may occur during the manufacturing of hydrogen tank liner molded articles, and have a synergistic effect in enhancing heat resistance.

The antioxidant may include a phenol-based, amine-based, or phosphite-based antioxidant, or a mixture thereof.

An amount of the antioxidant may be 0.1 wt% to 1.0 wt%, for example 0.1 wt% to 0.3 wt%, based on a total weight of the polyamide resin composition. If the amount of antioxidant is less than 0.1 wt%, the effect of improving heat resistance may be minimal, whereas if it exceeds 1.0 wt%, the surface condition may be poor due to gas generation during injection processing.

The release agent may include an ethylene bis stearamide-based, polyethylene-based, or ester-based release agent, or a mixture thereof.

An amount of the release agent may be 0.1 wt% to 1.0 wt%, for example, 0.1 wt% to 0.5 wt%, based on a total weight of the polyamide resin composition. If the amount of the release agent is less than 0.1 wt%, the release property may not be good during molding, and if it exceeds 0.5 wt%, a slip phenomenon and gas may occur during extrusion and injection processing.

Optionally, the polyamide resin composition may dramatically improve the tensile elongation at a low temperature of -40 °C by further including at least one of polyamide 66 and an aromatic polyamide in addition to the aforementioned components. Such a polyamide resin composition may be suitably used as a material for a high-performance hydrogen tank liner.

Optionally, the polyamide resin composition may further include other additives as needed. The other additives may include, for example, a plasticizer, a flame retardant, an antioxidant, a reinforcing agent, a dye, a pigment, an ultraviolet ray absorber, a nucleating agent, a lubricant, or a combination thereof.

The other additives may be included in an amount of 0 wt% to 10 wt%, for example, 0.1 wt% to 9 wt%, 0.1 wt% to 6 wt%, 0.1 wt% to 5 wt%, 0.1 wt% to 4 wt%, 0.1 wt% to 3 wt%, 0.1 wt% to 2 wt%, or 0.2 wt% to 1 wt% based on a total weight of the polyamide resin composition. In this case, the purpose of the additive can be achieved without affecting other properties.

The method for preparing a polyamide resin composition can utilize any of the general methods for preparing a polyamide resin composition, and as an example, a method using a single-screw or twin-screw extruder may be used.

In another embodiment, a molded article for a pressure vessel liner is provided, manufactured using the aforementioned polyamide resin composition.

A method for manufacturing a molded article for a pressure vessel liner using a polyamide resin composition can utilize any method for manufacturing a general polyamide resin molded article, and is not particularly limited.

The molded article for a pressure vessel liner may be, for example, a hydrogen storage device in a hydrogen-powered transportation device, or may be, for example, a hydrogen tank liner for a hydrogen automobile.

The molded article for a pressure vessel liner can have a tensile elongation of greater than or equal to 70% at a low temperature of -40 °C. That is, since the molded article for the pressure vessel liner is manufactured using the aforementioned polyamide resin, it has excellent gas barrier properties and good tensile elongation at low temperature (-40 °C) and impact resistance at low temperature (-40 °C).

### [Mode for Invention]

Hereinafter, specific examples of the invention are presented. However, the examples described below are only intended to specifically illustrate or describe the invention, and this should not limit the scope of the invention.

### [Preparation Example: Preparation of polyamide resin composition]

### (Example 1)

79.5 wt% of polyamide 6 (PA6), 5 wt% of PA1012 as a long chain polyamide, 25 wt% of ethylene-octene rubber (493D) as an impact modifier, 0.3 wt% of ethylene bis stearamide (EBS) as a release agent, and 0.2 wt% of an antioxidant (a mixture of a phenol-based antioxidant and a phosphite-based antioxidant) are mixed using an extruder to prepare a polyamide resin composition.

The polyamide resin composition is extruded by changing an extrusion temperature from 250 °C to 280 °C and a screw speed from 250 rpm to 450 rpm and then, cooled to manufacture a pellet. The obtained pellet is injected into an injection molding machine to manufacture a molded article as a multi-purpose test specimen.

### (Examples 2 to 8)

A composition and a molded article are manufactured in the same manner as in Example 1, except that the amounts of polyamide 6, long chain polyamide, and impact modifier are changed, as shown in Table 1.

### (Comparative Example 1)

89.5 wt% of polyamide 6 (PA6), 5 wt% of PA1012 as a long chain polyamide, 5 wt% of ethylene-octene rubber (493D) as an impact modifier, 0.3 wt% of ethylene bis stearamide (EBS) as a release agent, and 0.2 wt% of an antioxidant (a mixture of a phenol-based antioxidant and a phosphite-based antioxidant) are mixed using an extruder to prepare a polyamide resin composition.

The polyamide resin composition is extruded by changing an extrusion temperature from 250 °C to 280 °C and a screw speed from 250 rpm to 450 rpm and then, cooled to manufacture a pellet. The obtained pellet is injected into an injection molding machine to manufacture a molded article as a multi-purpose test specimen.

### (Comparative Example 2)

84.5 wt% of polyamide 6 (PA6), 15 wt% of ethylene-octene rubber (493D) as an impact modifier, 0.3 wt% of ethylene bis stearamide (EBS) as a release agent, and 0.2 wt% of an antioxidant (a mixture of a phenol-based antioxidant and a phosphite-based antioxidant) are mixed using an extruder to prepare a polyamide resin composition.

The polyamide resin composition is extruded by changing an extrusion temperature from 250 °C to 280 °C and a screw speed from 250 rpm to 450 rpm and then, cooled to manufacture a pellet. The obtained pellet is injected into an injection molding machine to manufacture a molded article as a multi-purpose test specimen.

### (Comparative Example 3)

69.5 wt% of polyamide 6 (PA6), 30 wt% of ethylene-octene rubber (493D) as an impact modifier, 0.3 wt% of ethylene bis stearamide (EBS) as a release agent, and 0.2 wt% of an antioxidant (a mixture of a phenol-based antioxidant and a phosphite-based antioxidant) are mixed using an extruder to prepare a polyamide resin composition.

The polyamide resin composition is extruded by changing an extrusion temperature from 250 °C to 280 °C and a screw speed from 250 rpm to 450 rpm and then, cooled to manufacture a pellet. The obtained pellet is injected into an injection molding machine to manufacture a molded article as a multi-purpose test specimen.

### (Comparative Example 4)

34.5 wt% of polyamide 6 (PA6), 25 wt% of PA1012 as a long chain polyamide, 40 wt% of ethylene-octene rubber (493D) as an impact modifier, 0.3 wt% of ethylene bis stearamide (EBS) as a release agent, and 0.2 wt% of an antioxidant (a mixture of a phenol-based antioxidant and a phosphite-based antioxidant) are mixed using an extruder to prepare a polyamide resin composition.

The polyamide resin composition is extruded by changing an extrusion temperature from 250 °C to 280 °C and a screw speed from 250 rpm to 450 rpm and then, cooled to manufacture a pellet. The obtained pellet is injected into an injection molding machine to manufacture a molded article as a multi-purpose test specimen.

**(Table 1)**

| | PA6 | PA1012 | Impact modifier | Release agent | Antioxidant |
|---|---|---|---|---|---|
| Example1 | 79.5 | 5 | 15 | 0.3 | 0.2 |
| Example2 | 64.5 | 5 | 30 | 0.3 | 0.2 |
| Example3 | 69.5 | 15 | 15 | 0.3 | 0.2 |
| Example4 | 54.5 | 15 | 30 | 0.3 | 0.2 |
| Example5 | 59.5 | 25 | 15 | 0.3 | 0.2 |
| Example6 | 39.5 | 25 | 35 | 0.3 | 0.2 |
| Example7 | 54.5 | 30 | 15 | 0.3 | 0.2 |
| Example8 | 39.5 | 30 | 30 | 0.3 | 0.2 |
| Comparative Example1 | 89.5 | 5 | 5 | 0.3 | 0.2 |
| Comparative Example2 | 84.5 | 0 | 15 | 0.3 | 0.2 |
| Comparative Example3 | 69.5 | 0 | 30 | 0.3 | 0.2 |
| Comparative Example4 | 34.5 | 25 | 40 | 0.3 | 0.2 |

| | | | | | |
|---|---|---|---|---|---|
| (unit: wt%) 1) PA6: Polyamide 6 (Hyosung 1031BRT product) 2) PA1012: Long chain polyamide (Shandong Dongcheon PA1012 product) 3) impact modifier: Ethylene-octene rubber (DUPONT FUSAMOND N493 product) 4) Release agent: Ethylene bis stearamide (Shinwon Chemical Co., Ltd. HI-LUBE product) 5) Antioxidant: Mixture of a phenol-based antioxidant and a phosphite-based antioxidant (ASC BB98240 product) | | | | | |

### [Experimental Example: Measurement of physical properties of polyamide resin molded articles]

The molded articles according to the examples and the comparative examples are evaluated with respect to tensile strength, tensile elongation, and impact strength at room temperature (23 °C) and a low temperature (-40 °C) in the following method, and the results are shown in Table 2.

The tensile strength and the tensile elongation are evaluated according to ISO 527 under a condition of 50 mm/min.

The Izod impact strength is evaluated by using a 3.2 mm-thick specimen with a notch in the center and a 5.5 J impact hammer at 23 °C according to ISO 180.

In addition, after aging a specimen at -40 °C for 4 hours in a chamber maintaining an atmosphere of -40 °C with liquid nitrogen, the specimen is evaluated with respect to properties at a low temperature such as tensile strength, tensile elongation, and Izod impact strength.

**(Table 2)**

| | Room temperature (23 °C) | | | Low temperature (-40 °C) | | |
|---|---|---|---|---|---|---|
| | Tensile strength (MPa) | Tensile elongation (%) | Impact strength (kJ/m²) | Tensile strength (MPa) | Tensile elongation (%) | Impact strength (kJ/m²) |
| Example 1 | 54 | 150 or more | 75 | 79 | 34 | 21 |
| Example 2 | 54 | 150 or more | nb | 58 | 44 | 77 |
| Example 3 | 55 | 150 or more | 79 | 72 | 60 | 20 |
| Example 4 | 47 | 150 or more | nb | 59 | 72 | 82 |
| Example 5 | 59 | 150 or more | nb | 67 | 63 | 22 |
| Example 6 | 35 | 150 or more | nb | 55 | 115 | 87 |
| Example 7 | 47 | 150 or more | nb | 55 | 108 | 78 |
| Example 8 | 42 | 150 or more | nb | 54.5 | 82 | 85 |
| Comparative Example 1 | 61 | 147 | 23 | 98 | 11 | 9 |
| Comparative Example 2 | 48 | 109 | 55 | 75 | 10 | 18 |
| Comparative Example 3 | 54 | 128 | nb | 70 | 15 | 87 |
| Comparative Example 4 | 29 | 148 | 96 | 55 | 115 | 77 |

| | | | | | | |
|---|---|---|---|---|---|---|
| 1) nb: non-breakable | | | | | | |

Referring to Table 2, Examples 1 to 8 exhibit excellent physical properties such as tensile strength, tensile elongation, and impact strength at room temperature and low temperature. In particular, Examples 1 and 2 exhibit excellent properties at low temperatures even when including only 5 wt% of long chain polyamide.

In the case of Comparative Examples 2 and 3, the properties at low temperatures are not good because long chain polyamide is not included, and in the case of Comparative Example 1, it can be seen that the amount of the impact modifier should be included at least 15 wt%. In addition, in the case of Comparative Example 4, it can be seen that when the content of the impact modifier is too high, the tensile elongation and impact strength at low temperatures are improved, but the tensile strength is significantly low.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### [Industrial Applicability]

The present disclosure relates to a polyamide resin composition for a hydrogen tank liner and a molded article manufactured using the same, and provides a polyamide resin composition having excellent mechanical properties at room temperature and low temperature, high gas barrier properties, and superior durability while including a small amount of long chain polyamide.

## Claims

1. A polyamide resin composition, comprising
38 wt% to 82 wt% of polyamide 6,
1 wt% to 30 wt% of a long chain polyamide,
15 wt% to 35 wt% of an impact modifier including a polyolefin-based rubber,
0.1 to 1.0 wt% of an antioxidant including a phenol-based antioxidant, an amine-based antioxidant, a phosphite-based antioxidant, or a mixture thereof, and
0.1 to 1.0 wt% of a release agent including ethylene bis stearamide.

2. The polyamide resin composition of claim 1, wherein
a relative viscosity of the polyamide 6 is 1.8 to 3.4.

3. The polyamide resin composition of claim 1, wherein
the long chain polyamide is a polyamide having 8 to 20 carbon atoms per nitrogen atom in one repeating unit.

4. The polyamide resin composition of claim 3, wherein
the long chain polyamide includes PA8, PA9, PA10, PA11, PA12, PA13, PA48, PA410, PA412, PA414, PA418, PA58, PA510, PA512, PA514, PA518, PA68, PA610, PA612, PA614, PA618, PA88, PA810, PA812, PA1010, PA1012, PA1014, PA1018, PA1210, PA1212, PA1214, PA1218, PA1410, PA1412, PA1414, PA1418, PA8T, PA9T, PA10T, PA12T, PA8I, PA9I, PA101, PA12I, a copolymer thereof, or a mixture thereof.

5. The polyamide resin composition of claim 4, wherein
the long chain polyamide includes PA11, PA12, PA610, PA612, PA618, PA1010, PA1012, PA1212, a copolymer thereof, or a mixture thereof.

6. The polyamide resin composition of claim 1, wherein
the polyamide resin composition includes 15 wt% to 25 wt% of the long chain polyamide based on a total weight of the polyamide resin composition.

7. The polyamide resin composition of claim 1, wherein
the impact modifier further includes an ethylene-propylene rubber, an ethylene-propylene-diene rubber, an ethylene-vinyl acetate rubber, or a mixture thereof.

8. The polyamide resin composition of claim 1, wherein
the release agent further includes a polyethylene-based release agent, an ester-based release agent, or a mixture thereof.

9. The polyamide resin composition of claim 1, wherein
the polyamide resin composition has
a tensile elongation at low temperature (-40 °C) (ISO 527, measurement speed: 50 mm/min) of greater than or equal to 30%, and
an impact strength (ISO 180, IZOD) at low temperature (-40 °C) of greater than or equal to 20 kJ/m².

10. A molded article for a pressure vessel liner manufactured using a polyamide resin composition according to any one of claims 1 to 9.
